# EUROPEAN PATENT SPECIFICATION

(11) **EP 4 331 770 B1**
(45) Date of publication and mention of the grant of the patent: **02.12.2026**
(21) Application number: 23189159.9
(22) Date of filing: 02.08.2023
(51) Int. Cl.: B23Q 1/54

(54) **OPERATING HEAD AND METHOD FOR MACHINING PROFILED BARS**
BEARBEITUNGSKOPF UND VERFAHREN ZUM BEARBEITEN VON PROFILSTÄBEN
TÊTE D'USINAGE ET PROCÉDÉ D'USINAGE DE BARRES PROFILÉES

(30) Priority: 01.09.2022 IT 202200017946
(43) Date of publication of application: 06.03.2024
(73) Proprietor: elumatec AG, 75417 Mühlacker (DE)
(72) Inventor: THOMAS, Raimund, 75447 DIEFENBACH (DE)
(74) Representative: Colò, Chiara

(56) References cited:
- EP-A1- 2 684 641
- EP-B1- 1 712 337
- DE-B3- 102020 002 815
- US-A1- 2018 290 249

## Description

The invention relates to a machine tool with an operating head and a method for machining profiled bars, in particular profiled bars intended to form door or window frames. The profiled bars may be made of metallic materials, for example aluminium, or synthetic polymeric materials, for example polyvinyl chloride (PVC), or composite materials.

In order to perform cutting, milling, drilling and other operations on the profiled bars, it is known to use machine tools, in particular machining centres, comprising an operating head which supports an electro-spindle. In more detail, the operating head comprises a vertical upright to which a supporting body is connected, the supporting body supporting the electro-spindle. The supporting body is connected to the vertical upright by an articulated joint, so as to be able to rotate by 90° clockwise or anticlockwise relative to the vertical upright. This makes it possible to machine three faces of a profiled bar having an approximately rectangular or square cross-section. In particular, by positioning the supporting body in a configuration aligned with the vertical upright, it is possible to machine the upper face of the profiled bar. If, on the other hand, the supporting body is rotated by 90° relative to the vertical upright, respectively clockwise or anticlockwise, it is possible to machine the two side faces of the profiled bar.

Machine tools of the type described above have a very simple structure. However, they do not allow all four faces of the profiled bar to be machined, since it is not possible to position the electro-spindle in such a way as to machine a lower face of the profiled bar.

Machining centres are also known in which the supporting body which supports the electro-spindle is mounted on a slewing bearing rotatable about a vertical axis. These machining centres allow all the faces of a profiled bar to be machined but have a very complicated structure, large dimensions and a high cost.

Other examples of known machines are disclosed in EP 2527081, EP 2979811, DE 102020002815, WO 2018/213898, WO 2004/080649, EP2684641. These documents disclose machines capable of carrrying out machining operations on a plurlaity of faces of an object. However, the machines disclosed in the documents mentioned above are 5-axes machines, which have a rather complicated structure and a high cost.

US 2018/290249 A1 discloses a machine tool with an operating head comprising an intermediate component with two axes of rotation that are parallel to each other.

An object of the invention is to improve the operating heads and the methods for machining profiled bars.

Another object is to provide an operating head which is able to perform machining operations on all the faces of a profiled bar, in particular on the upper face, on the lower face and on the side faces of a profiled bar having an approximately quadrangular cross-section.

Another object is to provide an operating head having a simple structure, which is able to machine a multiplicity of faces of a profiled bar.

According to a first aspect of the invention, a machine tool is provided as defined in claim 1.

The intermediate component introduces a possibility of additional movement for the supporting body, so as to also be able to machine the lower face of a profiled bar.

Indeed, by rotating the supporting body by 90° relative to the intermediate component and by rotating the intermediate component by 90° relative to the arm, it is possible to position the tool vertically so that it faces upwards, in order to machine the lower face of the profile. This may occur without the tool and the supporting body interacting with the arm, since the intermediate component allows the tool and the supporting body to be moved outside the dimensions of the arm.

The operating head according to the first aspect of the invention therefore allows all the faces of a profiled bar to be machined, without excessive structural complications. Indeed, it is not necessary to use a slewing bearing or other bulky and expensive mechanical devices.

The intermediate component is rotatable about a first axis relative to the arm.

The supporting body is rotatable about a second axis relative to the intermediate component.

The second axis is parallel to the first axis.

It is thus possible, with a single additional component, namely the intermediate component, to make the machine tool in which the operating head is included capable of working all the faces of a profiled bar.

In an embodiment, the first portion of the intermediate component is a first end portion, which is hinged to the arm.

In an embodiment, the second portion of the intermediate component is a second end portion, which is hinged to the supporting body and is opposite the first end portion.

This makes very simple the structure of the operating head according to the first aspect of the invention.

In an embodiment, the intermediate component is positionable in an aligned configuration in which the intermediate component is aligned with the arm or alternatively in a rotated configuration, in which the intermediate component is rotated by 90° relative to the arm.

By suitably moving the supporting body relative to the intermediate component arranged in the aligned configuration, it is possible to machine the side faces and the upper face of the profiled bar.

In particular, the supporting body is positionable in an aligned position with respect to the intermediate component, or in a position rotated by 90°, clockwise or alternatively anticlockwise, relative to the intermediate component.

In an embodiment, the arm has a narrowing of its cross-section, whereby a cross-section of the arm decreases from an end region of the arm which can be connected to the supporting frame of the machine tool, to a further end region of the arm connected to the intermediate component.

The narrowing of the cross-section makes it possible to reduce the overall dimensions of the arm in an operating zone in which the profiled bar will be machined, so as to limit the length and the stroke of the parts of the operating head.

In a second aspect of the invention, there is provided a method for machining profiled bars using an operating head comprising a spindle which supports a tool, a supporting body to which the spindle is fixed, an arm fixed to a supporting frame of a machine tool, and an intermediate component having a first portion rotatably connected to the arm and a second portion rotatably connected to the supporting body, wherein there is provided modifying the mutual angular position of the arm and the intermediate component and of the intermediate component and the supporting body, in order to machine different faces of a profiled bar.

In an embodiment, the intermediate component is positioned in a configuration vertically aligned with the arm.

The supporting body may be rotated by 90° relative to the intermediate component to machine a first side face of the profiled bar.

The supporting body may be rotated by 270° relative to the intermediate component to machine a second side face of the profiled bar, opposite the first side face.

The supporting body may be arranged in a position aligned with the intermediate component, for machining an upper face of the profiled bar.

In an embodiment, the intermediate component is positioned in a configuration rotated by 90° relative to the arm.

The supporting body may be rotated by 90° relative to the intermediate component, to machine a lower face of the profiled bar.

It is therefore possible to machine all the faces of the profiled bar in a very simple manner.

The invention can be better understood and implemented with reference to the accompanying drawings which illustrate a non-limiting examplary embodiment thereof and wherein:
Figure 1 is a schematic side view showing an operating head in a first operating configuration;
Figure 2 is a view like that of Figure 1, showing the operating head in a second operating configuration;
Figure 3 is a view like that of Figure 1, showing the operating head in a third operating configuration;
Figure 4 is a view like that of Figure 1, showing the operating head in a fourth operating configuration.

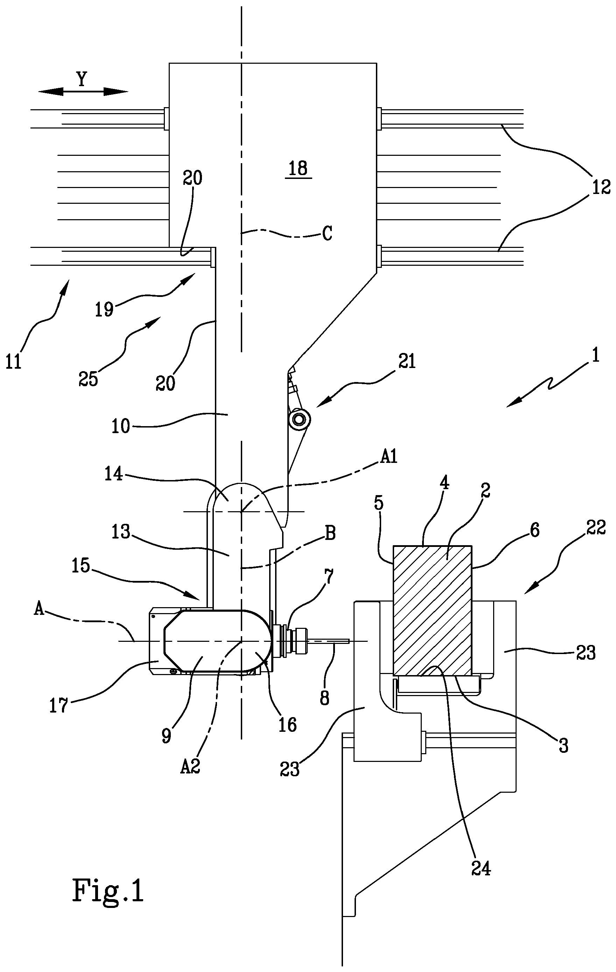

Figure 1 shows an operating head 1 for machining profiled bars 2, one of which is shown in Figure 1, in a transversal cross-section taken in a plane perpendicular to the length of the profiled bar 2.

The operating head 1 may be included in a machine tool, in particular a numerical control machine tool such as a machining centre. The operating head 1 is able to perform machining operations of various types, for example drilling, milling and the like, on the profiled bars 2.

The profiled bars 2 may be made of different types of materials, for example metallic materials such as aluminium, synthetic polymeric materials such as polyvinyl chloride (PVC), composite materials and the like. The profiled bars 2 may have a solid cross-section, as shown schematically in Figure 1, or a hollow cross-section.

Figure 1 shows the profiled bar 2 schematically as having a quadrangular cross-section, in particular rectangular. The operating head 1 may also be used for machining profiled bars 2 having a more complicated shape than that shown in Figure 1, for example comprising ribs, grooves, inclined planes, recesses and reinforcement flaps.

In general, in the profiled bar 2 it is possible to identify a lower face 3, an upper face 4, a first side face 5 and a second side face 6. The upper face 4 is generally opposite the lower face 3. The first side face 5 is generally opposite the second side face 6 and is interposed between the lower face 3 and the upper face 4. The second side face 6 is also interposed between the lower face 3 and the upper face 4.

In the example shown, the lower face 3 and the upper face 4 are arranged substantially horizontally, whilst the first side face 5 and the second side face 6 are arranged substantially vertically. However, this condition is not necessary and, according to an alternative embodiment, the lower face 3 and the upper face 4 might be tilted relative to the horizontal direction, whilst the side faces 5 and 6 could be tilted relative to the vertical direction.

The operating head 1 comprises a spindle 7, for example an electro-spindle, suitable for supporting a tool 8 for performing the required mechanical operations on the profiled bar 2. The spindle 7 is mounted on a supporting body 9 which may have, for example, a generally parallelepiped shape. The supporting body 9 has a main dimension relative to the other two, so that in the supporting body 9 it is possible to define a longitudinal axis A, arranged along the main dimension. The longitudinal axis A may, for example, coincide with an axis of rotation of the tool 8.

The operating head 1 further comprises an arm 10, which can be fixed to a supporting frame 11 of the machine tool. In an embodiment, the supporting frame 11 may comprise a pair of guides 12, which extend along a direction Y, for example horizontal. The operating head 1 is slidably mounted along the guides 12, so as to be movable forwards and backwards in a guided manner along the direction Y.

According to an alternative embodiment, the operating head 1 could be fixed to the supporting frame 11 in different ways from that shown in Figure 1.

Between the arm 10 and the supporting body 9 an intermediate component 13 is interposed, the intermediate component 13 connecting the arm 10 to the supporting body 9. The intermediate component 13 has a first end 14 connected to the arm 10, in such a way that the intermediate component 13 can rotate about a first axis A1 relative to the arm 10. The first axis A1 is perpendicular to the plane of Figure 1 and in the example shown is horizontal. The first end 14 of the intermediate component 13 may be, for example, hinged to the arm 10.

The intermediate component 13 also has a second end 15, opposite the first end 14, connected to the supporting body 9, in such a way that the supporting body 9 can rotate about a second axis A2 relative to the intermediate component 13. The second axis A2 is perpendicular to the plane of Figure 1 and in the example shown is horizontal. The second axis A2 is at parallel to the first axis A1.

The first axis A1 and the second axis A2 are fixed relative to each other.This means that the relative position of the first axis A1 and of the second axis A2 does not change during operation of the operating head 1. That occurs because the first axis A1 and the second axis A2 are the axes of a single component, namely the intermediate component 13, which acts as a single piece and not as a component made of a plurality of parts movable relative to each other.

The supporting body 9 has two degrees of freedom relative to the arm 10, namely a first rotation about the first axis A1 and a second rotation about the second axis A2.

It is possible to define a plane B containing the first axis A1 and the second axis A2, the outline of which is visible in Figure 1. In the operating configuration shown in Figure 1, the plane B is substantially vertical.

More specifically, the supporting body 9 may be hinged to the intermediate component 13 at the second end 15 of the latter.

The intermediate component 13 may be connected to a portion 16 of the supporting body 9, the portion 16 being interposed between the spindle 7 and an end region 17 of the supporting body 9. The intermediate component 13 extends principally in a main direction, which is vertical in the example and in the operating configuration of Figure 1.

The arm 10 extends mainly in a longitudinal direction C, which is vertical in the example of Figure 1.

The arm 10 may comprise an enlarged portion 18, arranged at an end of the arm 10 mounted on the supporting frame 11. The arm 10 has a narrowing of its cross-section 19, wherein the size of the arm 10 transversally to the longitudinal direction C narrows, for the reasons described in more detail below.

The narrowing of the cross-section 19 may be defined by two surfaces 20 of the arm 10, substantially perpendicular to each other.

The narrowing of the cross-section 19 defines on the arm 10 a recess or indentation 25. As will be better described below, the indentation 25 avoids interferences with the profiled bar 2 while the lower face 3 of the profiled bar 2 is being machined.

The operating head 1 comprises a rotary actuator, not illustrated, for rotating the supporting body 9 relative to the intermediate component 13 about the second axis A2. The rotary actuator may be of the electric type, for example an electric motor, or of the hydraulic, pneumatic or other type.

The operating head 1 further comprises a driving mechanism 21 for rotating the intermediate component 13 relative to the arm 10 about the first axis A1. In the example shown, the driving mechanism 21 is a lever mechanism. Other driving mechanisms 21 can be used, for example electrical, pneumatic, hydraulic or mechanical.

The machine tool on which the operating head 1 is mounted further comprises a supporting device for supporting the profiled bar 2 during the mechanical machining. The supporting device may comprise at least one gripping unit 22 for keeping the profiled bar 2 stationary during the mechanical machining operations. There may be two or more gripping units 22, distributed along a longitudinal dimension of the profiled bar 2.

Each gripping unit 22 may comprise two jaws 23, movable relative to each other between a disengaged configuration and a clamped configuration. In the clamped configuration, the profiled bar 2 is clamped between the jaws 23, so that the profiled bar 2 does not move in an unwanted manner when it is machined by the tool 8. In the disengaged configuration, the jaws 23 have moved away from each other so as to leave the profiled bar 2 free, so that the latter can be removed from the machine tool after being machined, and/or a new profiled bar 2 can be inserted between the jaws 23.

The gripping unit 22 may have a resting surface 24, for example fixed relative to one of the two jaws 23, on which the profiled bar 2 can be rested whilst the required machining operations are performed.

During operation, the intermediate component 13 is positioned relative to the arm 10 and the supporting body 9 is positioned relative to the intermediate component 13, according to arrangements which vary depending on the face of the profiled bar 2 which needs to be machined.

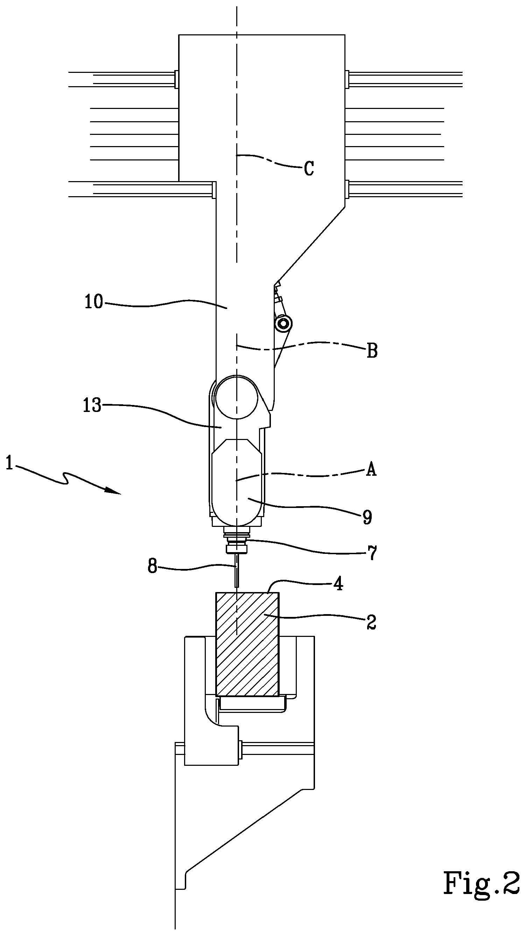

If, for example, it is required to machine the upper face 4 of the profiled bar 2, the operating head 1 is arranged in the operating configuration shown in Figure 2, in which the longitudinal axis A is substantially vertical, that is to say, the tool 8 is positioned substantially vertically and protrudes downwards from the spindle 7.

The supporting body 9 is substantially aligned with the intermediate component 13 in a vertical direction.

More specifically, the longitudinal axis A is parallel to the plane B, which is in turn parallel to the longitudinal direction C. The longitudinal axis A and the plane B are both substantially vertical.

In this way, the upper face 4 of the profiled bar 3 can be machined.

If, on the other hand, mechanical machining is to be performed on the first side face 5 of the profiled bar 2, that is to say, on the face facing towards the left in Figure 1, the supporting body 9 is rotated by 90° in a clockwise direction about the second axis A2, relative to the intermediate component 13. The latter remains in a position vertically aligned with the arm 10. In other words, the plane B is parallel to the longitudinal direction C, whilst the longitudinal axis A is arranged transversely, in particular perpendicularly, to the plane B. This configuration is shown in Figure 1.

The spindle 7 is arranged horizontally, in such a way that the tool 8 faces to the right and can machine the first side face 5 of the profiled bar 2.

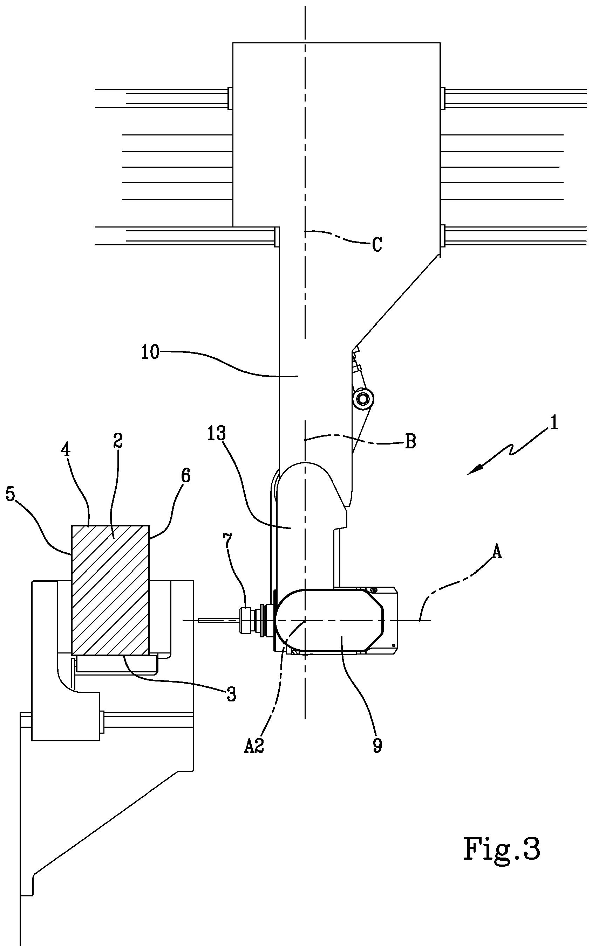

Figure 3 shows the operating configuration in which the operating head 1 is arranged when a mechanical operation is to be performed on the second side face 6 of the profiled bar 2, that is to say, on the side face facing towards the left in the example illustrated. The operating configuration shown in Figure 3 differs from that shown in Figure 2 only because the supporting body 9 is rotated by 270° in a clockwise direction (that is to say, by 90° in an anticlockwise direction) about the second axis A2 relative to the intermediate component 13.

The longitudinal axis A is therefore arranged in a substantially horizontal position, in such a way that the spindle 7 faces towards the second side face 6, that is to say, faces to the left in the example shown.

The intermediate component 13 is still vertically aligned with the arm 10, that is to say, it is positioned in such a way that the plane B is parallel to the longitudinal direction C. In this way, the second side face 6 may be subjected to the desired machining operations.

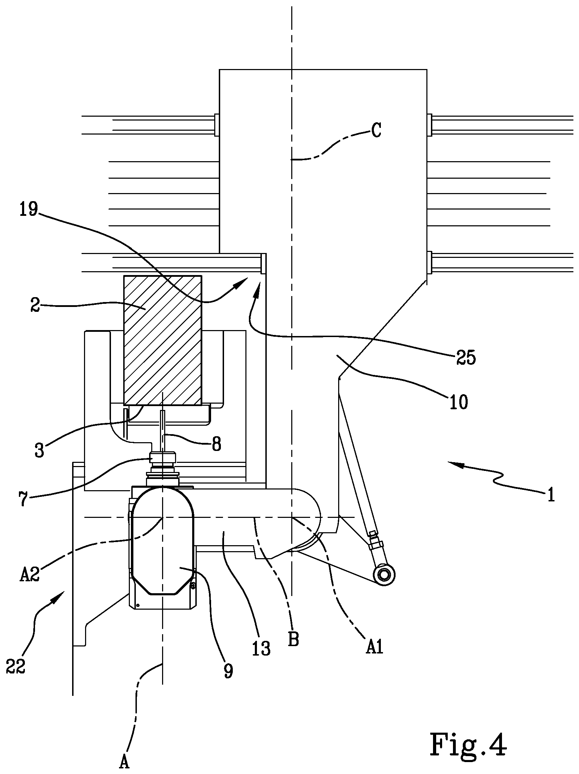

Figure 4 shows an operating configuration in which the operating head 1 performs a mechanical operation on the lower face 3 of the profiled bar 2, which was not possible with the operating heads according to the prior art. The portion of the lower face 3 to be machined is not resting on the resting surface 24 of the gripping unit 22, which is positioned in such a way as to leave that portion free.

The intermediate component 13 is arranged transversally to the arm 10, in particular it is rotated by 90° in an anticlockwise direction relative to the arm 10. In other words, the intermediate component 13 is positioned in such a way that the plane B, on which the first axis A1 and the second axis A2 lie, is substantially horizontal, that is to say, perpendicular to the longitudinal direction C in which the arm 10 mainly extends.

The supporting body 9 is arranged transversally to the intermediate component 13, in particular it is rotated by 90° in an anticlockwise direction about the second axis A2 relative to the intermediate component 13. In this way, the spindle 7 faces upwards, and the tool 8 faces the lower face 3 and is able to perform mechanical machining operations on the latter.

In the operating configuration shown in Figure 4, the supporting body 9 is located below the supporting bar 2 and has the spindle 7 facing upwards, that is to say, facing the lower face 3. The arm 10 is positioned on one side of the profiled bar 2. The intermediate component 13 connects the arm 10 and the supporting body 9 and is arranged transversally to the longitudinal direction C and to the axis A. The intermediate component 13 is at a lower level than the profiled bar 2.

Owing to the narrowing of the cross-section 19 of the arm 10, which defines on the arm 10 the indentation 25, it is possible to keep the dimensions of the operating head 1 compact, since the profiled bar 2 can be moved closer to a vertical plane passing through the first axis A1 than what occurred if the indentation 25 were not present, which makes it possible to limit the dimensions of the intermediate component 13 and the strokes of the parts which form the operating head 1.

The operating head 1 therefore allows, with a simple but robust structure, all the faces of the profiled bar 2 to be machined.

The supporting body 9 may be configured to rotate through steps of 90° (that is to say, in an indexed manner) relative to the intermediate component 13. According to an alternative embodiment, the supporting body 9 may be configured to rotate continuously, and position itself in any angular position, relative to the intermediate component 13.

A similar consideration is applicable with regard to the rotation of the intermediate component 13 relative to the arm 10.

According to the version illustrated, the intermediate component 13 is rotated by 90° in an anticlockwise direction relative to the arm 10, for machining the lower face 3 of the profiled bar 2.

According to an alternative embodiment not illustrated, the lower face 3 can be machined whilst the profiled bar 2 is positioned to the right of the arm 10. This means that the intermediate component 13 is rotated by 90° in an anticlockwise direction relative to the arm 10 to perform mechanical operations on the profiled bar 2.

The intermediate component 13 allows also the lower face 3 of a profiled bar 2 to be machined with a machine tool having 4 controlled axes, which is therefore simpler and less expensive than the known machine tools having 5 controlled axes.

The 4 controlled axes, in the machine tool in which the operating head according to the invention is included, may be:
- a horizontal axis extending perpendicularly to the direction Y shown in Figure 1;
- a further horizontal axis extending along the direction Y;
- a vertical axis;
- a rotation axis extending parallellly to the first axis A1, around which the supporting body 9 is rotatable.

Owing to the invention, it is possible to give to a 4-axes machine tool some functionalities of a 5-axes machine tool, without introducing the complications due to the presence of a fifth axis to be controlled.

## Claims

1. A machine tool comprising an operating head (1) for machining profiled bars (2), the operating head (1) comprising a spindle (7) for supporting a tool (8), a supporting body (9) to which the spindle (7) is fixed, an arm (10) suitable for being connected to a supporting frame (11) of the machine tool, the operating head (1) further comprising an intermediate component (13) having a first portion (14) rotatably connected to the arm (10), so that the intermediate component (13) may rotate around a first axis (A1) relative to the arm (10), the intermediate component (13) furthermore having a second portion (15) rotatably connected to the supporting body (9), so that the supporting body (9) may rotate around a second axis (A2) relative to the intermediate component (13), wherein the first portion (14) of the intermediate component (13) is a first end portion, which is hinged to the arm (10), the second portion (15) of the intermediate component (13) being a second end portion, which is hinged to the supporting body (9) and is opposite the first end portion, and wherein the second axis (A2) is parallel to the first axis (A1),
the supporting body (9) having an axis (A) about which the spindle (7) is rotatable, the intermediate component (13) defining a plane (B) containing the first axis (A1) and the second axis (A2), and the arm (10) extending along a longitudinal direction (C),
**characterized in that** the operating head (1) is adapted to machine a lower face (3) of the profiled bar (2) by positioning the intermediate component (13) in a rotated configuration in which said plane (B) is arranged transversally to the longitudinal direction (C), and by positioning the supporting body (9) in a rotated position in which said axis (A) is arranged transversally to said plane (B).

2. The machine tool according to claim 1, wherein, in the rotated configuration, said plane (B) is perpendicular to the longitudinal direction (C) and, in the rotated position, said axis (A) is arranged perpendicularly to said plane (B).

3. The machine tool according to claim 1 or 2, wherein the intermediate component (10) is positionable in an aligned configuration in which said plane (B) is parallel to the longitudinal direction (C), and wherein the supporting body (9) is positionable in the rotated position in which said axis (A) is arranged transversally to said plane (B), so as to machine a side face (5; 6) of the profiled bar (2).

4. The machine tool according to claim 3, wherein the intermediate component (10) is positionable in the aligned configuration in which said plane (B) is parallel to the longitudinal direction (C), and wherein the supporting body (9) is positionable in an aligned position in which said axis (A) is parallel to said plane (B) or contained in said plane, so as to machine an upper face (4) of the profiled bar (2).

5. The machine tool according to any preceding claim, wherein the arm (10) has a narrowing of its cross-section (19) which defines an indentation (25) on the arm (10), whereby a cross-section of the arm (10) decreases from an end region of the arm (10) which is connected to the supporting frame (11) of the machine tool, to a further end region of the arm (10) connected to the intermediate component (13), so as to reduce the overall dimensions of the arm (10) in an operating zone in which the profiled bar (2) will be machined.

6. A method for machining profiled bars (2) using an operating head (1) comprising a spindle (7) which supports a tool (8), the operating head (1) further comprising a supporting body (9) to which the spindle (7) is fixed, an arm (10) connected to a supporting frame (11) of a machine tool, and an intermediate component (13) having a first portion (14) rotatably connected to the arm (10) so that the intermediate component (13) may rotate around a first axis (A1) relative to the arm (10), the intermediate component (13) further having a second portion (15) rotatably connected to the supporting body (9) so that the supporting body (9) may rotate around a second axis (A2) relative to the intermediate component (13), the second axis (A2) being parallel to the first axis (A1), wherein the supporting body (9) has an axis (A) about which the spindle (7) is rotatable, the intermediate component (13) defining a plane (B) containing the first axis (A1) and the second axis (A2), and wherein the arm (10) extends along a longitudinal direction (C), wherein there is provided modifying the mutual angular position of the arm (10) and the intermediate component (13) and of the supporting body (9) and the intermediate component (13) in order to machine different faces of a profiled bar (2), and wherein a lower face (3) of the profiled bar (2) is machined by positioning the intermediate component (13) transversely relative to the arm (10), so that said plane (B) is arranged transversally to the longitudinal direction (C), and by positioning the supporting body (9) transversally relative to the intermediate component (13), so that said axis (A) is arranged transversally to said plane (B).

7. The method according to claim 6, wherein a lower face (6) of the profiled bar (2) is machined by positioning the supporting body (9) below the profiled bar, in such a way that the tool (8) faces upwards, and positioning the arm (10) on one side of the profiled bar (2), the plane (B) defined by the intermediate component (13) being arranged transversally to the longitudinal direction of the arm (10) and to the axis (A) of the supporting body (9).

8. The method according to claim 6, wherein a lower face (3) of the profiled bar (2) is machined by rotating the intermediate component (13) by 90° relative to the arm (10) and rotating the supporting body (9) by 90° relative to the intermediate component (13).

## Patentansprüche

1. Werkzeugmaschine, umfassend einen Arbeitskopf (1) zum Bearbeiten von Profilstäben (2), wobei der Arbeitskopf (1) eine Spindel (7) zum Tragen eines Werkzeugs (8), einen Tragekörper (9), an dem die Spindel (7) befestigt ist, und einen Arm (10), der zur Verbindung mit einem Tragerahmen (11) der Werkzeugmaschine geeignet ist, umfasst, wobei der Arbeitskopf (1) ferner eine Zwischenkomponente (13) umfasst, aufweisend einen ersten Abschnitt (14), der drehbar mit dem Arm (10) verbunden ist, sodass sich die Zwischenkomponente (13) um eine erste Achse (A1) herum relativ zu dem Arm (10) drehen kann, wobei die Zwischenkomponente (13) ferner einen zweiten Abschnitt (15) aufweist, der drehbar mit dem Tragekörper (9) verbunden ist, sodass sich der Tragekörper (9) um eine zweite Achse (A2) herum relativ zu der Zwischenkomponente (13) drehen kann, wobei der erste Abschnitt (14) der Zwischenkomponente (13) ein erster Endabschnitt ist, der an dem Arm (10) angelenkt ist, wobei der zweite Abschnitt (15) der Zwischenkomponente (13) ein zweiter Endabschnitt ist, der an dem Tragekörper (9) angelenkt ist und dem ersten Endabschnitt gegenüberliegt, und wobei die zweite Achse (A2) parallel zu der ersten Achse (A1) verläuft,
wobei der Tragekörper (9) eine Achse (A) aufweist, um die die Spindel (7) drehbar ist, wobei die Zwischenkomponente (13) eine Ebene (B) definiert, die die erste Achse (A1) und die zweite Achse (A2) enthält, und wobei sich der Arm (10) entlang einer Längsrichtung (C) erstreckt,
**dadurch gekennzeichnet, dass** der Arbeitskopf (1) ausgelegt ist, um eine untere Fläche (3) des Profilstabs (2) durch Positionieren der Zwischenkomponente (13) in einer gedrehten Konfiguration, in der die Ebene (B) quer zu der Längsrichtung (C) angeordnet ist, und durch Positionieren des Tragekörpers (9) in einer gedrehten Position, in der die Achse (A) quer zu der Ebene (B) angeordnet ist, zu bearbeiten.

2. Werkzeugmaschine nach Anspruch 1, wobei die Ebene (B) in der gedrehten Konfiguration senkrecht zu der Längsrichtung (C) steht und die Achse (A) in der gedrehten Position senkrecht zu der Ebene (B) angeordnet ist.

3. Werkzeugmaschine nach Anspruch 1 oder 2, wobei die Zwischenkomponente (10) in einer ausgerichteten Konfiguration positionierbar ist, in der die Ebene (B) parallel zu der Längsrichtung (C) verläuft, und wobei der Tragekörper (9) in der gedrehten Position positionierbar ist, in der die Achse (A) quer zu der Ebene (B) angeordnet ist, sodass eine Seitenfläche (5; 6) des Profilstabs (2) bearbeitet wird.

4. Werkzeugmaschine nach Anspruch 3, wobei die Zwischenkomponente (10) in der ausgerichteten Konfiguration positionierbar ist, in der die Ebene (B) parallel zu der Längsrichtung (C) verläuft, und wobei der Tragekörper (9) in einer ausgerichteten Position positionierbar ist, in der die Achse (A) parallel zu der Ebene (B) verläuft oder in der Ebene enthalten ist, sodass eine obere Fläche (4) des Profilstabs (2) bearbeitet wird.

5. Werkzeugmaschine nach einem der vorhergehenden Ansprüche, wobei der Arm (10) eine Verengung seines Querschnitts (19) aufweist, die eine Vertiefung (25) an dem Arm (10) definiert, wodurch ein Querschnitt des Arms (10) von einer Endregion des Arms (10), die mit dem Tragerahmen (11) der Werkzeugmaschine verbunden ist, zu einer weiteren Endregion des Arms (10), die mit der Zwischenkomponente (13) verbunden ist, abnimmt, sodass die Gesamtabmessungen des Arms (10) in einer Arbeitszone, in der der Profilstab (2) bearbeitet wird, reduziert werden.

6. Verfahren zum Bearbeiten von Profilstäben (2) mithilfe eines Arbeitskopfs (1), umfassend eine Spindel (7), die ein Werkzeug (8) trägt, wobei der Arbeitskopf (1) ferner einen Tragekörper (9), an dem die Spindel (7) befestigt ist, einen Arm (10), der mit einem Tragerahmen (11) einer Werkzeugmaschine verbunden ist, und eine Zwischenkomponente (13) umfasst, aufweisend einen ersten Abschnitt (14), der drehbar mit dem Arm (10) verbunden ist, sodass sich die Zwischenkomponente (13) um eine erste Achse (A1) herum relativ zu dem Arm (10) drehen kann, wobei die Zwischenkomponente (13) ferner einen zweiten Abschnitt (15) aufweist, der drehbar mit dem Tragekörper (9) verbunden ist, sodass sich der Tragekörper (9) um eine zweite Achse (A2) herum relativ zu der Zwischenkomponente (13) drehen kann, wobei die zweite Achse (A2) parallel zu der ersten Achse (A1) verläuft, wobei der Tragekörper (9) eine Achse (A) aufweist, um die die Spindel (7) drehbar ist, wobei die Zwischenkomponente (13) eine Ebene (B) definiert, die die erste Achse (A1) und die zweite Achse (A2) enthält, und wobei sich der Arm (10) entlang einer Längsrichtung (C) erstreckt, wobei ein Ändern der gegenseitigen Winkelposition des Arms (10) und der Zwischenkomponente (13) und des Tragekörpers (9) und der Zwischenkomponente (13) vorgesehen ist, um unterschiedliche Flächen eines Profilstabs (2) zu bearbeiten, und wobei eine untere Fläche (3) des Profilstabs (2) durch Positionieren der Zwischenkomponente (13) quer relativ zu dem Arm (10), sodass die Ebene (B) quer zu der Längsrichtung (C) angeordnet ist, und durch Positionieren des Tragekörpers (9) quer relativ zu der Zwischenkomponente (13), sodass die Achse (A) quer zu der Ebene (B) angeordnet ist, bearbeitet wird.

7. Verfahren nach Anspruch 6, wobei eine untere Fläche (6) des Profilstabs (2) durch Positionieren des Tragekörpers (9) unterhalb des Profilstabs derart, dass das Werkzeug (8) nach oben zeigt, und Positionieren des Arms (10) auf einer Seite des Profilstabs (2) bearbeitet wird, wobei die durch die Zwischenkomponente (13) definierte Ebene (B) quer zu der Längsrichtung des Arms (10) und zu der Achse (A) des Tragekörpers (9) angeordnet ist.

8. Verfahren nach Anspruch 6, wobei eine untere Fläche (3) des Profilstabs (2) durch Drehen der Zwischenkomponente (13) um 90° relativ zu dem Arm (10) und Drehen des Tragekörpers (9) um 90° relativ zu der Zwischenkomponente (13) bearbeitet wird.

## Revendications

1. Machine-outil comprenant une tête opératrice (1) destinée à l'usinage de barres profilées (2), la tête opératrice (1) comprenant une broche (7) destinée à supporter un outil (8), un corps de support (9) auquel est fixée la broche (7), et un bras (10) apte à être relié à un châssis de support (11) de la machine-outil, la tête opératrice (1) comprenant en outre un élément intermédiaire (13) présentant une première partie (14) reliée de manière rotative au bras (10), de sorte que l'élément intermédiaire (13) puisse tourner autour d'un premier axe (A1) par rapport au bras (10), l'élément intermédiaire (13) présentant en outre une seconde partie (15) reliée de manière rotative au corps de support (9), de sorte que le corps de support (9) puisse tourner autour d'un second axe (A2) par rapport à l'élément intermédiaire (13), dans laquelle la première partie (14) de l'élément intermédiaire (13) est une première partie d'extrémité, qui est articulée au bras (10), la seconde partie (15) de l'élément intermédiaire (13) étant une seconde partie d'extrémité, qui est articulée au corps de support (9) et qui est opposée à la première partie d'extrémité, et dans laquelle le second axe (A2) est parallèle au premier axe (A1),
le corps de support (9) présentant un axe (A) autour duquel la broche (7) peut tourner, l'élément intermédiaire (13) définissant un plan (B) contenant le premier axe (A1) et le second axe (A2), et le bras (10) s'étendant le long d'une direction longitudinale (C),
**caractérisée en ce que** la tête opératrice (1) est adaptée pour usiner une face inférieure (3) de la barre profilée (2) en positionnant l'élément intermédiaire (13) dans une configuration tournée dans laquelle ledit plan (B) est disposé transversalement par rapport à la direction longitudinale (C), et en positionnant le corps de support (9) dans une position tournée dans laquelle ledit axe (A) est disposé transversalement par rapport audit plan (B).

2. Machine-outil selon la revendication 1, dans laquelle, dans la configuration tournée, ledit plan (B) est perpendiculaire à la direction longitudinale (C) et, dans la position tournée, ledit axe (A) est disposé perpendiculairement audit plan (B).

3. Machine-outil selon la revendication 1 ou 2, dans laquelle l'élément intermédiaire (10) peut être positionné dans une configuration alignée dans laquelle ledit plan (B) est parallèle à la direction longitudinale (C), et dans laquelle le corps de support (9) peut être positionné dans la position tournée dans laquelle ledit axe (A) est disposé transversalement par rapport audit plan (B), de manière à usiner une face latérale (5 ; 6) de la barre profilée (2).

4. Machine-outil selon la revendication 3, dans laquelle l'élément intermédiaire (10) peut être positionné dans la configuration alignée dans laquelle ledit plan (B) est parallèle à la direction longitudinale (C), et dans laquelle le corps de support (9) peut être positionné dans une position alignée dans laquelle ledit axe (A) est parallèle audit plan (B) ou contenu dans ledit plan, de manière à usiner une face supérieure (4) de la barre profilée (2).

5. Machine-outil selon l'une quelconque des revendications précédentes, dans laquelle le bras (10) présente un rétrécissement de sa section transversale (19) qui définit une indentation (25) sur le bras (10), de sorte que la section transversale du bras (10) diminue d'une région d'extrémité du bras (10) reliée au châssis de support (11) de la machine-outil jusqu'à une région d'extrémité supplémentaire du bras (10) reliée à l'élément intermédiaire (13), afin de réduire les dimensions globales du bras (10) dans une zone d'opération où la barre profilée (2) sera usinée.

6. Procédé d'usinage de barres profilées (2) à l'aide d'une tête opératrice (1) comprenant une broche (7) qui supporte un outil (8), la tête opératrice (1) comprenant en outre un corps de support (9) auquel est fixée la broche (7), un bras (10) relié à un châssis de support (11) d'une machine-outil, et un élément intermédiaire (13) présentant une première partie (14) reliée de manière rotative au bras (10) de sorte que l'élément intermédiaire (13) puisse tourner autour d'un premier axe (A1) par rapport au bras (10), l'élément intermédiaire (13) présentant en outre une seconde partie (15) reliée de manière rotative au corps de support (9) de sorte que le corps de support (9) puisse tourner autour d'un second axe (A2) par rapport à l'élément intermédiaire (13), le second axe (A2) étant parallèle au premier axe (A1), dans lequel le corps de support (9) présente un axe (A) autour duquel la broche (7) peut tourner, l'élément intermédiaire (13) définissant un plan (B) contenant le premier axe (A1) et le second axe (A2), et dans lequel le bras (10) s'étend le long d'une direction longitudinale (C), dans lequel il est prévu de modifier la position angulaire mutuelle du bras (10) et de l'élément intermédiaire (13), ainsi que celle du corps de support (9) et de l'élément intermédiaire (13), afin d'usiner différentes faces d'une barre profilée (2), et dans lequel une face inférieure (3) de la barre profilée (2) est usinée en positionnant l'élément intermédiaire (13) transversalement par rapport au bras (10), de sorte que ledit plan (B) soit disposé transversalement par rapport à la direction longitudinale (C), et en positionnant le corps de support (9) transversalement par rapport à l'élément intermédiaire (13), de sorte que ledit axe (A) soit disposé transversalement par rapport audit plan (B).

7. Procédé selon la revendication 6, dans lequel une face inférieure (6) de la barre profilée (2) est usinée en positionnant le corps de support (9) sous la barre profilée, de sorte que l'outil (8) soit orienté vers le haut, et en positionnant le bras (10) d'un côté de la barre profilée (2), le plan (B) défini par l'élément intermédiaire (13) étant disposé transversalement par rapport à la direction longitudinale du bras (10) et à l'axe (A) du corps de support (9).

8. Procédé selon la revendication 6, dans lequel une face inférieure (3) de la barre profilée (2) est usinée en faisant tourner l'élément intermédiaire (13) de 90° par rapport au bras (10) et en faisant tourner le corps de support (9) de 90° par rapport à l'élément intermédiaire (13).
